# EUROPEAN PATENT SPECIFICATION

(11) **EP 3 584 104 B1**
(45) Date of publication and mention of the grant of the patent: **10.03.2021**
(21) Application number: 18178285.5
(22) Date of filing: 18.06.2018
(51) Int. Cl.: B60K 35/00, B60S 1/48, B60S 1/50

(54) **METHOD, SYSTEM, AND COMPUTER PROGRAM PRODUCT FOR PROVIDING A RECOMMENDATION MESSAGE REGARDING A FLUID OF A VEHICLE TO A USER OF THE VEHICLE**
VERFAHREN, SYSTEM UND COMPUTERPROGRAMMPRODUKT ZUR BEREITSTELLUNG EINER EMPFEHLUNGSNACHRICHT BEZÜGLICH EINES FLUIDS EINES FAHRZEUGS AN DEN BENUTZER DES FAHRZEUGS
PROCÉDÉ, SYSTÈME ET PRODUIT DE PROGRAMME INFORMATIQUE PERMETTANT DE FOURNIR UN MESSAGE DE RECOMMANDATION CONCERNANT UN FLUIDE D'UN VÉHICULE À UN UTILISATEUR DU VÉHICULE

(43) Date of publication of application: 25.12.2019
(73) Proprietor: Bayerische Motoren Werke Aktiengesellschaft, 80809 München (DE)
(72) Inventor: Li, Yang, West Caldwell, NJ 07006 (US)

(56) References cited:
- JP-A- 2008 291 678
- US-A1- 2016 033 293
- US-B2- 8 849 555

## Description

### Field of invention

The present invention relates to a method for providing a recommendation message regarding a fluid of a vehicle to a user of the vehicle. Further, the present invention relates to a system and a computer program product for providing a recommendation message regarding a fluid of a vehicle to a user of the vehicle.

### Background Art

Current monitoring systems of vehicles may display a message if and only if a fluid of a vehicle is low. For example, if the motor oil of a vehicle is low, a user of the vehicle receives a message to refill the motor oil. The message to refill the motor is displayed if and only if the monitoring system determines that the motor oil is below a predetermined threshold. Further, the message to refill motor oil may be displayed while driving the vehicle and when there is no location available to refill the motor oil of the vehicle. This may lead to dangerous situations for the vehicle and/or the user of the vehicle.

US 2016 / 033293 A1 discloses methods and systems for improving urea fluid usage on a vehicle. Based on when a urea tank needs to be refilled relative to when a fuel tank needs to be refilled during a vehicle journey, one or more alternate driving routes are suggested based on the range of the fluid getting depleted. The suggested driving routes include refilling stations where the depleting fluid can be refilled.

Accordingly, there may be a need for efficiently providing a recommendation message to refill a fluid of a vehicle to a user of the vehicle. In particular, there may be a need for efficiently increasing safety while driving a vehicle preferably in an autonomous driving mode.

### Summary of the Invention

This need is met by the subject matter according to the independent claims. Advantageous embodiments of the present invention are described by the dependent claims.

According to a first aspect of the invention, there is provided a method for providing a recommendation message regarding a fluid of a vehicle to a user of the vehicle according to claim 1. Preferably, the vehicle is an autonomous driving vehicle, e.g. a partially, highly, or fully autonomous driving vehicle. The fluid may comprise a washer fluid and/or a cleaning fluid which may be consumed by a component of the vehicle during operation of the vehicle. The recommendation message may be a notification message or a warning message. Additionally of alternatively, the recommendation message may be provided to a mobile device of the user of the vehicle. Preferably, the recommendation message may be provided to the user or a mobile device of the user when planning or creating a route, or when the system automatically plans the route based on historic, learning, or shared data, in particular a navigation route, for the vehicle and/or before starting to drive the route. Additionally or alternatively, the recommendation message may be provided, e.g. transmitted, to a control unit of the vehicle, which adapts its functionality based on the recommendation message.

The method determines a current measure of the fluid of the vehicle. The current measure may be determined by a measurement system which monitors the fluid. The method further determines a planned route of the vehicle. The route may be planned by a navigation system of the vehicle or an external device, e.g. a mobile device. The method determines at least one environmental condition of the planned route of the vehicle. For example, an environmental condition may comprise a weather condition, a road condition, in particular a road surface condition, a road topology condition, and/or a road geometry condition, a traffic condition, in particular a speed limit condition and/or a traffic control condition, and/or a geographic topology condition. The method determines a fluid consumption pattern of a cleaning system of a sensor of the vehicle depending on the at least one environmental condition of the planned route of the vehicle, and predicts the consumption of the fluid for the planned route of the vehicle based on the at least one environmental condition of the planned route of the vehicle and the determined fluid consumption pattern of the cleaning system of the sensor of the vehicle. The method generates the recommendation message dependent on the predicted consumption of the fluid for the planned route and the current measure of the fluid. Finally, the method provides the recommendation message to the user of the vehicle.

Advantageously, by predicting a consumption of the fluid based on the planned route of the vehicle, a recommendation message may be provided more efficiently to a user of the vehicle. The fluid consumption may be predicted more precisely. Accordingly, the recommendation message may be provided to a user more accurately. The user may use the vehicle more safely, since the fluid, e.g. a cleaning fluid or the motor oil, of the vehicle is available until the destination of the planned route. For example, when the fluid is a cleaning fluid of a sensor of the vehicle, the sensor can be cleaned at any time by consuming the cleaning fluid along the planned route. Accordingly, the sensor may provide its functionality more accurately as compared to a non-cleaned sensor. A driver assistance system using the cleaned sensor may function more precisely and more safely until the destination of the planned route.

According to an embodiment of the invention, the method may further determine a driving mode of the vehicle. The driving mode of the vehicle may comprises an autonomous driving mode or a manual driving mode. The autonomous driving mode may comprise partially, highly, and/or fully autonomous driving modes of the vehicle. The driving mode may be determined based on map data of the planned route. For example, the map data may indicate which driving mode is available at which segment of the planned route. The recommendation message may be generated dependent on the predicted consumption of the fluid for the planned route, the current measure of the fluid, and the driving mode of the vehicle. For example, an autonomous driving mode may require a larger consumption of cleaning fluid of the vehicle since the sensors have to be cleaned more often as compared to a manual driving mode. Thus, the recommendation message may indicate that the user has to refill the cleaning fluid if the user would like to drive autonomously along the planned route. This may provide the advantage that the recommendation message may be generated based on available driving modes along the planned route.

According to a further embodiment of the invention, the current measure of the fluid may be above a predetermined threshold, and the predetermined threshold may indicate a lower limit of the fluid. The predetermined threshold may be fixed. Accordingly, the current measure of the fluid indicates that there is enough fluid available with respect to the fixed lower limit of the fluid. The user of the vehicle does not receive a recommendation message with respect to the vehicle falling short of the fluid.

According to a further embodiment of the invention, the fluid of the vehicle is a washer fluid and/or a cleaning fluid.

According to a further embodiment of the invention, the at least one environmental condition of the vehicle comprises a current or historic weather condition, a road condition, and/or a traffic condition.

According to a further embodiment of the invention, the method may further comprise determining a user-specific driving pattern of the vehicle, and predicting the consumption of the fluid for the planned route of the vehicle based on the at least one environmental condition of the planned route of the vehicle and the user-specific driving pattern of the vehicle. This may provide the advantage that the consumption of the fluid is predicted more precisely.

According to a further aspect of the invention, there is provided a system for providing a recommendation message regarding a fluid of a vehicle to a user of the vehicle according to claim 7, the system comprising a processor, a memory, and instructions stored within the memory, wherein the instructions, when executed on the processor. Preferably, the system may use an internet communication data link to retrieve data required for performing the method. The instruction cause the system to determine a current measure of the fluid of the vehicle, to determine a planned route of the vehicle, to determine at least one environmental condition of the planned route of the vehicle, to predict a consumption of the fluid for the planned route of the vehicle based on the at least one environmental condition of the planned route of the vehicle, to generate the recommendation message dependent on the predicted consumption of the fluid for the planned route and the current measure of the fluid, and to provide the recommendation message to the user of the vehicle.

According to a further aspect of the invention, there is provided a computer program product for providing a recommendation message regarding a fluid of a vehicle to a user of the vehicle according to claim 8, the computer program product, when being executed by a data processor, is adapted for controlling and/or for carrying out the method as described above.

As used herein, reference to a computer program or a computer program product is intended to be equivalent to a reference to a program element and/or to a computer readable medium containing instructions for controlling a computer system to coordinate the performance of the above described method.

The computer program may be implemented as computer readable instruction code in any suitable programming language, such as, for example, JAVA, C++, and may be stored on a computer-readable medium (removable disk, volatile or non-volatile memory, embedded memory/processor, etc.). The instruction code is operable to program a computer or any other programmable device to carry out the intended functions. The computer program may be available from a network, such as the World Wide Web, from which it may be downloaded.

The invention may be realized by means of a computer program respectively software. However, the invention may also be realized by means of one or more specific electronic circuits respectively hardware. Furthermore, the invention may also be realized in a hybrid form, i.e. in a combination of software modules and hardware modules.

It has to be noted that embodiments of the invention have been described with reference to different subject matters. In particular, some embodiments have been described with reference to method type claims whereas other embodiments have been described with reference to apparatus type claims. However, a person skilled in the art will gather from the above and the following description that, unless other notified, in addition to any combination of features belonging to one type of subject matter also any combination between features relating to different subject matters, in particular between features of the method type claims and features of the apparatus type claims is considered as to be disclosed with this document.

The aspects defined above and further aspects of the present invention are apparent from the examples of embodiment to be described hereinafter and are explained with reference to the examples of embodiment. The invention will be described in more detail hereinafter with reference to examples of embodiment but to which the invention is not limited.

### Brief Description of the Drawings

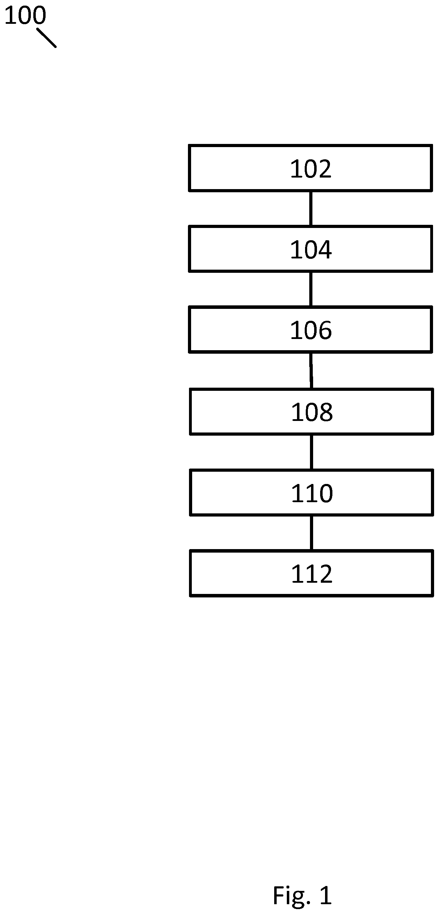

**Figure 1** shows an exemplary method for providing a recommendation message regarding a fluid of a vehicle to a user of the vehicle.

### Detailed Description

The illustration in the drawing is schematically. It is noted that in different figures, similar or identical elements are provided with the same reference signs or with reference signs, which are different from the corresponding reference signs only within the first digit.

**Figure 1** shows a method 100 for providing a recommendation message regarding a fluid of a vehicle to a user of the vehicle. Preferably, the vehicle is an autonomous driving vehicle. In particular, the method may provide an intelligent recommendation to refill a particular fluid of the vehicle before and/or during driving a planned route.

The method may determine 102 a current measure of the fluid of the vehicle. The fluid may be a washer or cleaning fluid of the vehicle. For example, the fluid may be used to wash or to clean a window of the vehicle and/or a surface of a sensor of the vehicle. The current measure of the fluid may be determined continuously, at predefined time intervals, and/or when receiving an event, e.g. when planning a route for the vehicle.

Further, the method may determine 104 a planned route of the vehicle. The route may be planned using a mobile device and/or using an in-car navigation system. Furthermore, the method may determine 106 at least one environmental condition of the planned route of the vehicle. To determine 106 at least one environmental condition, the method may send a request from the vehicle to the server to receive environmental data comprising one or more environmental conditions for the planned route.

The method may predict 108 a consumption of the fluid for the planned route of the vehicle based on the at least one environmental condition of the planned route of the vehicle. Additionally or alternatively, the method may predict a consumption rate of the fluid. For example, the consumption rate may indicate a consumption of the fluid for a given time period, a given number of cleaning tasks, a given driving speed, and/or a given distance. The at least one environmental condition may comprise a road condition and/or a weather condition. In particular, a current and/or past weather condition may be used as an indicator for a consumption of the fluid to clean a windshield and/or one or more sensors of the vehicle.

Additionally, predicting the consumption of fluid may be based on a driving pattern of the user of the vehicle. The driving pattern may indicate a particular type of road the user prefers. For example, the driving pattern may indicate that the user prefers dirt roads instead of paved roads. For example, the driving pattern may indicate that the user prefers to accelerate hard to merge onto a highway or out of a toll booth. Accordingly, additional fluid may be consumed by the vehicle due to the driving pattern of the user.

Further, the method may predict a location and/or a time for the vehicle to refill the fluid based on the consumption and/or the consumption rate of the fluid. The location and/or the time to refill the fluid may be additionally or alternatively determined by a traffic situation which the vehicle will face during the planned route. For example, traffic situation may be a traffic jam or a high traffic density for at least a part of the planned route.

Additionally or alternatively, a sensor may provide diagnostic data when a cleaning of the sensor is required. When predicting the consumption of the fluid for cleaning the sensor, the diagnostic data of the sensor may be used to predict the consumption of the fluid for cleaning the sensor. In particular, a learning algorithm may be used to learn, when the cleaning of the sensors is required and how much fluid for cleaning the sensors is consumed. For example, after a snow storm, the roads are cleared of snow by plow trucks. As the snow melts, the roads are filled with dirty water which are kicked up by the vehicle ahead. The dirty water will cover the sensor and initiate a cleaning of the one or more sensors.

The method may generate 110 the recommendation message dependent on the predicted consumption of the fluid for the planned route and the current measure of the fluid. For example, if the predicted consumption of the fluid is calculated for an autonomous driving mode of the vehicle, a recommendation message may be generated indicating that refilling of the fluid is required when the planned route will be driven using the autonomous driving mode of the vehicle. Further, the recommendation message may comprise one or more location which provide the fluid for refilling the vehicle. Additionally or alternatively, the recommendation message may notify the user of the vehicle that the autonomous driving mode of the vehicle may be available only for a part of the planned route due to insufficient fluid for cleaning one or more sensors required for proper operation of the autonomous driving mode of the vehicle. Additionally or alternatively, the recommendation message may provide a recommendation to the user of the vehicle to refill a particular amount of the fluid in order to ensure a proper operation of the vehicle when driving the planned route.

The method may provide 112 the recommendation message to the user of the vehicle. Additionally or alternative, the recommendation message may be provided to a control unit of the vehicle so that the operation of the control unit may be adapted by the recommendation message.

For example, the method 100 may be used to provide a recommendation to the user of the vehicle to refill one or more fluids for cleaning one or more sensors required for the autonomous driving mode of the vehicle. When a fluid for cleaning a sensor is low but not below a predetermined lower threshold, the user may use the autonomous driving mode of the vehicle with cleaned sensors which provide higher performance than non-cleaned sensors. The method 100 predicts previous to a planned route that the fluid should be refilled and provides this information to the user of the vehicle previous to driving the planned route.

If the fluid is a motor oil of the vehicle, the method 100 may be used to provide a recommendation to refill the motor oil previous to driving the planned route. Road geometry data and historic oil consumption data may be used to predict the oil consumption of the vehicle for the planned route. Accordingly, the user may be notified before reaching the lower threshold of the motor oil and thus may refill the motor oil before the planned trip.

Advantageously, the method 100 may efficiently improve the monitoring of fluid consumption so that a user may refill the fluid before driving a planned route. By receiving the recommendation message before the planned trip, the proper operation of the motor or the autonomous driving mode of the vehicle may be ensured. This may lead a higher safety when driving the vehicle along the planned route.

It should be noted that the term "comprising" does not exclude other elements or steps and the use of articles "a" or "an" does not exclude a plurality. Also elements described in association with different embodiments may be combined. It should also be noted that reference signs in the claims should not be construed as limiting the scope of the claims.

### List of reference signs:

- 100: method
- 102: determine a current measurement of a fluid
- 104: determine a planned route
- 106: determine at least one environmental condition
- 108: predict a consumption of a fluid
- 110: generation a recommendation message
- 112: provide a recommendation message

## Claims

1. Method (100) for providing a recommendation message regarding a fluid of a vehicle to a user of the vehicle, the method comprising:
determining (102) a current measure of the fluid of the vehicle;
determining (104) a planned route of the vehicle;
determining (106) at least one environmental condition of the planned route of the vehicle;
determining a fluid consumption pattern of a cleaning system of a sensor of the vehicle depending on the at least one environmental condition of the planned route of the vehicle;
predicting (108) a consumption of the fluid for the planned route of the vehicle based on the at least one environmental condition of the planned route of the vehicle and the determined fluid consumption pattern of the cleaning system of the sensor of the vehicle;
generating (110) the recommendation message dependent on the predicted consumption of the fluid for the planned route and the current measure of the fluid; and
providing (112) the recommendation message to the user of the vehicle.

2. Method according to claim 1, the method further comprising:
determining a driving mode of the vehicle; and
generating the recommendation message dependent on the predicted consumption of the fluid for the planned route, the current measure of the fluid, and the driving mode of the vehicle.

3. Method according to any one of claims 1 to 2, wherein the current measure of the fluid is above a predetermined threshold; and
wherein the predetermined threshold indicates a lower limit of the fluid.

4. Method according to claim 1, wherein the fluid of the vehicle is a washer fluid and/or a cleaning fluid.

5. Method according to any one of claims 1 to 3, wherein the at least one environmental condition of the vehicle comprises a current or historic weather condition, a road condition, and/or a traffic condition.

6. Method according to any one of claims 1 to 5, the method further comprising:
determining a user-specific driving pattern of the vehicle; and
predicting the consumption of the fluid for the planned route of the vehicle based on the at least one environmental condition of the planned route of the vehicle and the user-specific driving pattern of the vehicle.

7. System for providing a recommendation message regarding a fluid of a vehicle to a user of the vehicle, the system comprising:
a processor,
a memory,
instructions stored within the memory, wherein the instructions, when executed on the processor, cause the system to:
determine (102) a current measure of the fluid of the vehicle;
determine (104) a planned route of the vehicle;
determine (106) at least one environmental condition of the planned route of the vehicle;
determine a fluid consumption pattern of a cleaning system of a sensor of the vehicle depending on the at least one environmental condition of the planned route of the vehicle;
predict (108) a consumption of the fluid for the planned route of the vehicle based on the at least one environmental condition of the planned route of the vehicle and the determined fluid consumption pattern of the cleaning system of the sensor of the vehicle;
generate (110) the recommendation message dependent on the predicted consumption of the fluid for the planned route and the current measure of the fluid; and
provide (112) the recommendation message to the user of the vehicle.

8. Computer program product for providing a recommendation message regarding a fluid of a vehicle to a user of the vehicle, the computer program product, when being executed by a data processor, is adapted for controlling and/or for carrying out the method as set forth in any one of the claims 1 to 6.

## Patentansprüche

1. Verfahren (100) zum Bereitstellen einer Empfehlungsnachricht bezüglich eines Fluids eines Fahrzeugs an einen Benutzer des Fahrzeugs, wobei das Verfahren umfasst:
Ermitteln (102) eines aktuellen Maßes des Fluids des Fahrzeugs;
Ermitteln (104) einer geplanten Route des Fahrzeugs;
Ermitteln (106) von mindestens einer Umweltbedingung der geplanten Route des Fahrzeugs;
Ermitteln des Fluidverbrauchsmusters eines Reinigungssystems eines Sensors des Fahrzeugs in Abhängigkeit von der mindestens einen Umweltbedingung der geplanten Route des Fahrzeugs;
Vorhersagen (108) eines Verbrauchs des Fluids für die geplante Route des Fahrzeugs basierend auf der mindestens einen Umweltbedingung der geplanten Route des Fahrzeugs und dem ermittelten Fluidverbrauchsmuster des Reinigungssystems des Sensors des Fahrzeugs;
Generieren (110) der Empfehlungsnachricht in Abhängigkeit von dem vorhergesagten Verbrauch des Fluids für die geplante Route und das aktuelle Maß des Fluids; und
Bereitstellen (112) der Empfehlungsnachricht an den Benutzer des Fahrzeugs.

2. Verfahren nach Anspruch 1, wobei das Verfahren des Weiteren umfasst:
Ermitteln eines Fahrmodus des Fahrzeugs; und
Generieren der Empfehlungsnachricht in Abhängigkeit von dem vorhergesagten Verbrauch des Fluids für die geplante Route, das aktuelle Maß des Fluids und den Fahrmodus des Fahrzeugs.

3. Verfahren nach einem der Ansprüche 1 bis 2, wobei das aktuelle Maß des Fluids oberhalb eines vorgegebenen Schwellenwerts liegt; und
wobei der vorgegebene Schwellenwert eine untere Grenze des Fluids angibt.

4. Verfahren nach Anspruch 1, wobei das Fluid des Fahrzeugs ein Scheibenwaschfluid und/oder ein Reinigungsfluid ist.

5. Verfahren nach einem der Ansprüche 1 bis 3, wobei die mindestens eine Umweltbedingung des Fahrzeugs eine aktuelle oder frühere Wetterbedingung, eine Straßenbedingung und/oder eine Verkehrsbedingung umfasst.

6. Verfahren nach einem der Ansprüche 1 bis 5, wobei das Verfahren ferner umfasst:
Ermitteln eines benutzerspezifischen Fahrmusters des Fahrzeugs; und
Vorhersagen des Verbrauchs des Fluids für die geplante Route des Fahrzeugs basierend auf mindestens einer Umweltbedingung der geplanten Route des Fahrzeugs und dem benutzerspezifischen Fahrmuster des Fahrzeugs.

7. System zum Bereitstellen einer Empfehlungsnachricht bezüglich eines Fluids eines Fahrzeugs an einen Benutzer des Fahrzeugs, wobei das System umfasst:
einen Prozessor,
einen Speicher,
Anweisungen, die in dem Speicher gespeichert sind,
wobei die Anweisungen bei Ausführung auf dem Prozessor bewirken, dass das System folgendes ausführt:
Ermitteln (102) eines aktuellen Maßes des Fluids des Fahrzeugs;
Ermitteln (104) einer geplanten Route des Fahrzeugs;
Ermitteln (106) von mindestens einer Umweltbedingung der geplanten Route des Fahrzeugs;
Ermitteln eines Fluidverbrauchsmusters eines Reinigungssystems eines Sensors des Fahrzeugs in Abhängigkeit von der mindestens einen Umweltbedingung der geplanten Route des Fahrzeugs;
Vorhersagen (108) eines Verbrauchs des Fluids für die geplante Route des Fahrzeugs basierend auf der mindestens einen Umweltbedingung der geplanten Route des Fahrzeugs und dem ermittelten Fluidverbrauchsmuster des Reinigungssystems des Sensors des Fahrzeugs;
Generieren (110) der Empfehlungsnachricht in Abhängigkeit von dem vorhergesagten Verbrauch des Fluids für die geplante Route und das aktuelle Maß des Fluids; und
Bereitstellen (112) der Empfehlungsnachricht an den Benutzer des Fahrzeugs.

8. Computerprogrammprodukt zum Bereitstellen einer Empfehlungsnachricht bezüglich eines Fluids eines Fahrzeugs an einen Benutzer des Fahrzeugs, wobei das Computerprogrammprodukt bei Ausführung durch einen Datenprozessor eingerichtet ist, um das Verfahren gemäß einem der Ansprüche 1 bis 6 zu steuern und/oder durchzuführen.

## Revendications

1. Procédé (100) destiné à fournir un message de recommandation concernant un liquide d'un véhicule à un utilisateur du véhicule, le procédé comprenant :
la détermination (102) d'une mesure actuelle du liquide du véhicule ;
la détermination (104) d'un itinéraire planifié du véhicule ;
la détermination (106) d'au moins une condition environnementale de l'itinéraire planifié du véhicule ;
la détermination d'un motif de consommation de liquide d'un système de nettoyage d'un capteur du véhicule en fonction de l'au moins une condition environnementale de l'itinéraire planifié du véhicule ;
la prédiction (108) d'une consommation du liquide pour l'itinéraire planifié du véhicule sur la base de l'au moins une condition environnementale de l'itinéraire planifié du véhicule et du motif de consommation de liquide déterminé du système de nettoyage du capteur du véhicule ;
la génération (110) du message de recommandation en fonction de la consommation prédite du liquide pour l'itinéraire planifié et de la mesure actuelle du liquide ; et
la fourniture (112) du message de recommandation à l'utilisateur du véhicule.

2. Procédé selon la revendication 1, le procédé comprenant en outre :
la détermination d'un mode de conduite du véhicule ; et
la génération du message de recommandation en fonction de la consommation prédite du liquide pour l'itinéraire planifié, de la mesure actuelle du liquide, et du mode de conduite du véhicule.

3. Procédé selon l'une quelconque des revendications 1 à 2, dans lequel la mesure actuelle du liquide est au-dessus d'un seuil prédéterminé ; et
dans lequel le seuil prédéterminé indique une limite inférieure du liquide.

4. Procédé selon la revendication 1, dans lequel le liquide du véhicule est un liquide lave-glace et/ou un liquide de nettoyage.

5. Procédé selon l'une quelconque des revendications 1 à 3, dans lequel l'au moins une condition environnementale du véhicule comprend une condition météorologique actuelle ou historique, une condition de route, et/ou une condition de trafic.

6. Procédé selon l'une quelconque des revendications 1 à 5, le procédé comprenant en outre :
la détermination d'un motif de conduite du véhicule spécifique de l'utilisateur ; et
la prédiction de la consommation du liquide pour l'itinéraire planifié du véhicule sur la base de l'au moins une condition environnementale de l'itinéraire planifié du véhicule et du motif de conduite du véhicule spécifique de l'utilisateur.

7. Système destiné à fournir un message de recommandation concernant un liquide d'un véhicule à un utilisateur du véhicule, le système comprenant :.
un processeur,
une mémoire,
des instructions stockées à l'intérieur de la mémoire, les instructions, lorsqu'elles sont exécutées sur le processeur, conduisant le système à :
déterminer (102) une mesure actuelle du liquide du véhicule ;
déterminer (104) un itinéraire planifié du véhicule ;
déterminer (106) au moins une condition environnementale de l'itinéraire planifié du véhicule ;
déterminer un motif de consommation de liquide d'un système de nettoyage d'un capteur du véhicule en fonction de l'au moins une condition environnementale de l'itinéraire planifié du véhicule ;
prédire (108) une consommation du liquide pour l'itinéraire planifié du véhicule sur la base de l'au moins une condition environnementale de l'itinéraire planifié du véhicule et du motif de consommation de liquide déterminé du système de nettoyage du capteur du véhicule ;
générer (110) le message de recommandation en fonction de la consommation prédite du liquide pour l'itinéraire planifié et de la mesure actuelle du liquide ; et
fournir (112) le message de recommandation à l'utilisateur du véhicule.

8. Produit-programme informatique destiné à fournir un message de recommandation concernant un liquide d'un véhicule à un utilisateur du véhicule, le produit-programme informatique, lorsqu'il est exécuté par un processeur de données, étant adapté pour contrôler et/ou pour réaliser le procédé selon l'une quelconque des revendications 1 à 6.
